# EUROPÄISCHE PATENTSCHRIFT

(11) **EP 2 589 283 B1**
(45) Veröffentlichungstag und Bekanntmachung des Hinweises auf die Patenterteilung: **15.03.2017**
(21) Anmeldenummer: 12007034.7
(22) Anmeldetag: 11.10.2012
(51) Int. Cl.: A01B 73/04, A01B 49/02

(54) **Kombiniertes Bodenbearbeitungsgerät für große Arbeitsbreiten mit einklappbaren Seitenteilen**
Combined soil cultivation device for large work widths with collapsible side sections
Appareil de traitement de sol combiné pour de grandes largeurs de travail avec parties latérales rabattables

(30) Priorität: 07.11.2011 DE 202011107536 U
(43) Veröffentlichungstag der Anmeldung: 08.05.2013
(73) Patentinhaber: Kerner Maschinenbau GmbH, 89344 Aislingen (DE)
(72) Erfinder: Maucher, Christian, 86513 Ursberg-Mindelzell (DE)
(74) Vertreter: Gallo, Wolfgang

(56) Entgegenhaltungen:
- EP-A2- 0 164 724
- EP-A2- 1 616 466
- EP-A2- 1 935 766
- FR-A1- 2 446 586

## Beschreibung

Die Erfindung betrifft ein kombiniertes Bodenbearbeitungsgerät mit einer Mehrzahl von an einem Rahmen über die Arbeitsbreite verteilt sowie hintereinander angeordneten Bodenbearbeitungsorganen, einem höhenverstellbaren Fahrwerk zum Fahren auf Straßen und Wegen, und einer Rahmenkonstruktion mit einklappbaren Seitenteilen.

Aus einem Firmenprospekt der Anmelderin ist ein solches kombiniertes Bodenbearbeitungsgerät bekannt. Es weist eine Anordnung von an drei Balken über die Arbeitsbreite verteilten Grubberzinken auf, die jeweils mit Flügelscharen bestückt sind, weiter ein hinter dieser Grubberzinkenanordnung angeordnetes höhenverstellbares Fahrwerk, und eine Anordnung von hinter dem Fahrwerk folgenden Sternradverteilern und hinter diesen angeordneten Walzenelementen. Der Rahmen des Bodenbearbeitungsgeräts ist in Längsrichtung dreigeteilt und umfasst einen mit einer Zugdeichsel verbundenen Mittelteil und daran über Scharniergelenke mit längsverlaufender Scharnierachse verbundene Seitenteile, die mittels Hydraulikzylindern auf das Mittelteil einklappbar sind, um die Breite des Bodenbearbeitungsgeräts von der erheblichen Arbeitsbreite bei der Feldbearbeitung auf eine reduzierte Breite für Straßen- und Wegefahrten zu verringern.

Das Mittelteil und die daran einklappbar angeordneten Seitenteile des Rahmens erstrecken sich jeweils über einen Teil der Gesamtarbeitsbreite des Bodenbearbeitungsgeräts, und an jedem dieser Rahmenteile ist ein dem entsprechenden Teilbereich der Gesamtarbeitsbreite entsprechender Teil der Bodenbearbeitungswerkzeuge, also Grubberzinken, Sternradverteiler und Walzenelemente, angeordnet.

Aus der EP 1 935 766 A2 ist ein kombiniertes Bodenbearbeitungsgerät nach dem Oberbegriff des Anspruchs 1 bekannt.

Der Erfindung liegt die Aufgabe zugrunde, ein solches Bodenbearbeitungsgerät für große Arbeitsbreiten mit klappbarer Rahmenkonstruktion im Hinblick auf konstruktive Zweckmäßigkeit, Handhabbarkeit, und Straßen- und Wegefahrtauglichkeit weiterzubilden.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Bei der erfindungsgemäßen Konstruktion sind die Bodenbearbeitungswerkzeuge nur an den Seitenteilen des Rahmens angeordnet, während das Mittelteil des Rahmens, an dem die Deichsel angeordnet ist, keine Werkzeuge trägt, sondern nur einen zentralen tragenden Längsrahmen für die Seitenteile bildet, an dem das Fahrwerk angeordnet ist und Hydraulikzylinder für das Ein- und Ausklappen der Seitenteile angelenkt sind. Da alle Bodenbearbeitungswerkzeuge an den einklappbaren Seitenteilen angeordnet sind, ergibt sich bei zur Straßenfahrt eingeklappten, d.h. in eine parallele, nach oben weisende vertikale Stellung geschwenkten Seitenteilen, eine erheblich größere Bodenfreiheit für das Fahren auf Feldwegen und Straßen, da keine Bodenbearbeitungswerkzeuge, insbesondere keine Grubber-zinken mehr nach unten ragen.

Es versteht sich, dass die Erfindung nicht auf eine Anordnung von Bodenbearbeitungswerkzeugen beschränkt ist, wie sie in dem bekannten Gerät vorhanden sind, sondern auf jede Art von Bodenbearbeitungsgerät mit kombinierten Werkzeugen und großer Arbeitsbreite anwendbar ist.

Bei der erfindungsgemäßen Konstruktion kann weiter das Fahrwerk, das bei dem oben beschriebenen bekannten Gerät nur am Mittelteil des Rahmens angeordnet ist und dort vier Räder umfasst, die über die Breite des Geräts bei eingeklappten Seitenteilen verteilt sind, durch zusätzliche Fahrwerksräder an den einklappbaren Seitenteilen verbreitert werden. Denn das Fahrwerk dient nicht nur zum Fahren auf Straßen und Wegen bei eingeklappten Seitenteilen, sondern auch zum Fahren des in seiner Arbeitsposition mit ausgeklappten Seitenteilen befindlichen Bodenbearbeitungsgeräts bei ausgehobenen bzw. angehobenen Bodenbearbeitungswerkzeugen für Wendemanöver und ähnliches auf dem bearbeiteten Acker. Zum Fahren auf Straßen und Wegen kommen dann nur die am Mittelteil angeordneten Fahrwerksräder zum Einsatz.

In der nach oben eingeklappten Position der Seitenteile sind diese mittels einer daran jeweils angeordneten Vorrichtung vorzugsweise verriegelt, so dass sich eine kompakte geschlossene und gegen Erschütterungen beim Fahren über holprige Feldwege unempfindliche Anordnung ergibt.

Weitere Einzelheiten und Vorteile der erfindungsgemäßen Konstruktion ergeben sich aus der folgenden Beschreibung eines Ausführungsbeispiels unter Bezugnahme auf die anliegenden Zeichnungen, in denen zeigt:
- Fig. 1: ein Bodenbearbeitungsgerät nach der Erfindung in der Arbeitsstellung in perspektivischer Darstellung,
- Fig. 2: das Bodenbearbeitungsgerät nach Fig. 1 in Seitenansicht in der Arbeitsstellung,
- Fig. 3: das Bodenbearbeitungsgerät in Seitenansicht in der Fahrstellung,
- Fig. 4: das Bodenbearbeitungsgerät nach Fig. 1 in der Fahrstellung in Ansicht von vorn, und
- Fig. 5: das Bodenbearbeitungsgerät nach Fig. 1 in der Fahrstellung in Draufsicht.

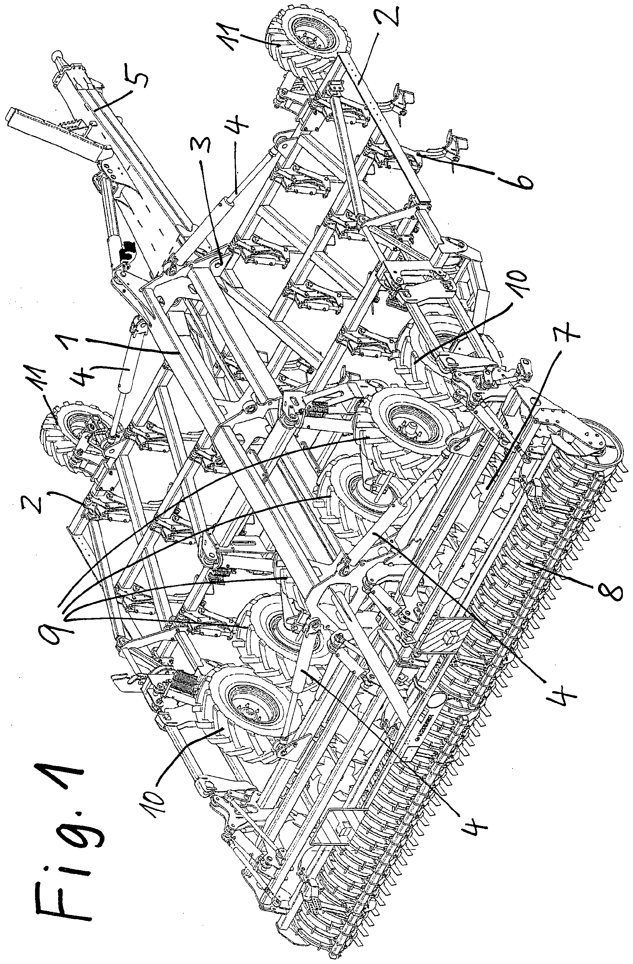

Fig. 1 zeigt ein Bodenbearbeitungsgerät nach der Erfindung in perspektivischer Darstellung. Es besteht aus einem in Längsrichtung geteilten Rahmen mit einem Mittelteil 1, an dem beiderseits, also an beiden Längsseiten, jeweils ein Seitenteil 2 angeordnet ist. Die beiden Seitenteile sind mittels Scharniergelenken 3, von denen eines trotz der recht komplizierten Zeichnung deutlich sichtbar ist, jeweils um eine längsverlaufende Achse klappbar am Mittelteil 1 angeordnet. Hydraulikzylinder 4, die jeweils am Mittelteil 1 und an den Seitenteilen 2 angelenkt sind, dienen zum Einklappen und Ausklappen der Seitenteile 2 mit Bezug auf das Mittelteil 1.

Am vorderen Ende des Mittelteils 1 ist eine Deichsel 5 angeordnet, mit der das Bodenbearbeitungsgerät an einem Traktor angehängt werden kann.

Das dargestellte Bodenbearbeitungsgerät ist mit einer Kombination von Bodenbearbeitungswerkzeugen bestückt, nämlich einer Anordnung von Grubberzinken 6, die jeweils mit Flügelscharen bestückt sind, sowie mit einer querverlaufenden Reihe von Sternradverteilern 7 und mit Walzenelementen 8. Die Grubberzinken 6 sind im vorderen Bereich des Bodenbearbeitungsgeräts und die Sternradverteiler 7 und die Walzenelemente 8 im hinteren Bereich des Bodenbearbeitungsgeräts angeordnet. Zwischen der Anordnung von Grubberzinken 6 und den Anordnungen der Sternradverteiler 7 und der Walzenelemente 8 ist ein Fahrwerk angeordnet. Das Fahrwerk umfasst beim Ausführungsbeispiel vier Haupträder 9, die ein am Mittelteil 1 des Rahmens angebautes Hauptfahrwerk bilden, sowie zwei Zusatzräder 10, die jeweils Teil eines am jeweiligen Seitenteil 2 angeordneten Zusatzfahrwerks bilden, so dass das Fahrwerk insgesamt deutlich verbreitert ist. Die Zusatzräder 10 sind also mit dem jeweiligen Seitenteil 2 klappbar. Sowohl die Haupträder 9 als auch die Zusatzräder 10 sind in gleicher Weise höhenverstellbar, nämlich insbesondere zwischen einer Fahrposition, in welcher die Bodenbearbeitungswerkzeuge vom Boden abgehoben sind und nur die Räder 9, 10 sich auf dem Boden befinden, und einer Arbeitsposition des Bodenbearbeitungsgeräts, in welcher die Grubberzinken 6 in den Boden eingreifen und die Sternradverteiler 7 und die Walzenelemente 8 ebenfalls in den Boden eingreifen.

Am vorderen Ende jedes Seitenteils 2 befindet sich außerdem noch jeweils Stützrad 11, das ebenfalls höhenverstellbar ist.

Sämtliche Bodenbearbeitungswerkzeuge sind ausschließlich an den beiden Seitenteilen 2 angeordnet. Dabei ist die Anordnung so getroffen, dass bei in die Arbeitsstellung geklappten Seitenteilen 2 die Grubberzinken gleichmäßig über die gesamte Arbeitsbreite des Bodenbearbeitungswerkzeugs verteilt sind, ebenso die Sternradverteiler 7, und dass die Walzenelemente 8 dann eine im Verlauf der Breite des Bodenbearbeitungsgeräts ununterbrochene Walzenanordnung bilden. Am Mittelteil 1 des Rahmens sind keine Bodenbearbeitungswerkzeuge angeordnet. Das Mittelteil 1 bildet lediglich einen tragenden Rahmen, an dem die Deichsel 5 und das Hauptfahrwerk mit den Haupträdern 9 angeordnet ist, und das einen Träger für die Seitenteile 2 bildet.

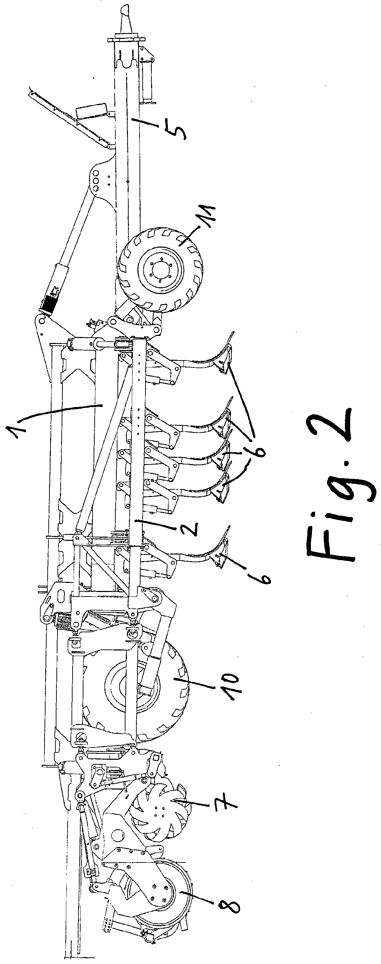

Fig. 2 zeigt wie vorstehend anhand Fig. 1 beschriebene Anordnung in der Seitenansicht in Arbeitsstellung, also mit angehobenen Fahrwerksrädern, von denen in Fig. 2 nur das am sichtbaren Seitenteil 2 angeordnete Zusatzrad 10 sichtbar ist. Mit der Höheneinstellung der Fahrwerksräder 9, 10 und der Stützräder 11 am vorderen Ende der Seitenteile 2 kann die Arbeitstiefe der Bodenbearbeitungswerkzeuge eingestellt werden.

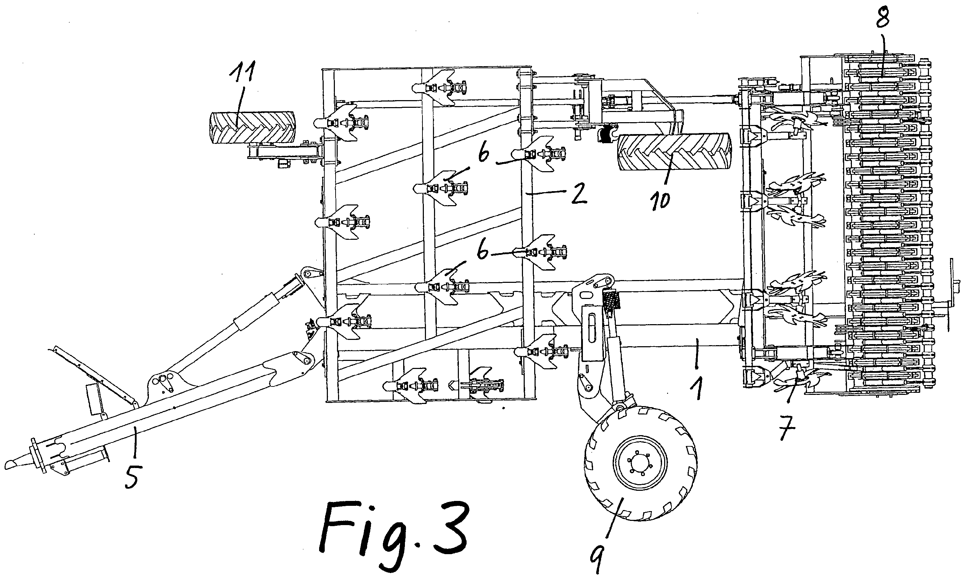

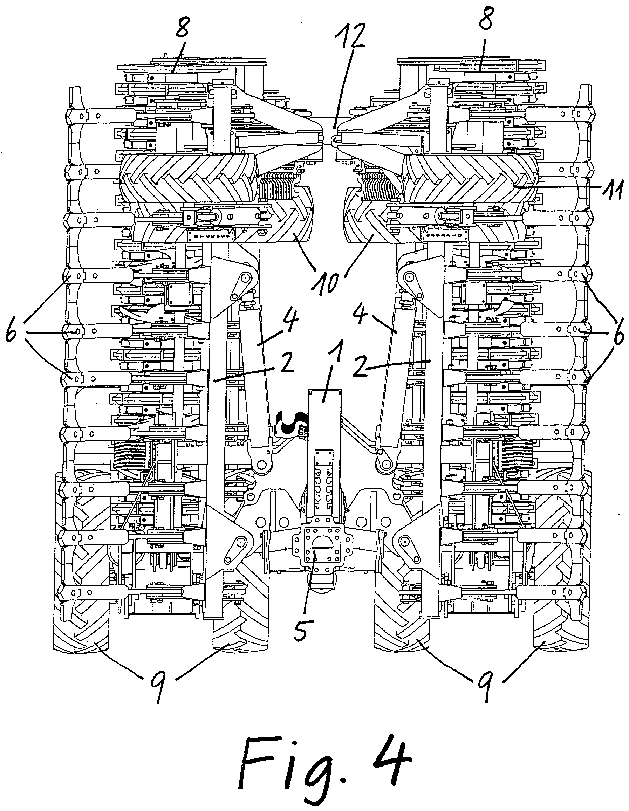

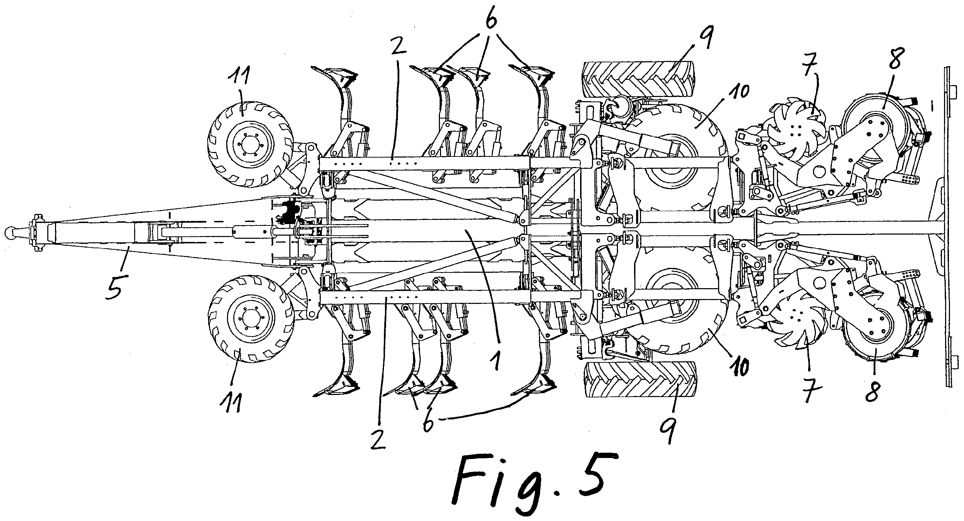

Die Fig. 3, 4 und 5 zeigen das Bodenbearbeitungsgerät nach Fig. 1 in der Fahrstellung für Straßen- und Wegefahrt mit hochgeklappten Seitenteilen 2 in verschiedenen Ansichten, nämlich in Fig. 3 in Seitenansicht, in Fig. 4 in Frontansicht, und in Fig. 5 in Draufsicht.

Aus den Fig. 3 und 4 ist die große Bodenfreiheit des Bodenbearbeitungsgeräts in der Fahrstellung mit hochgeklappten Seitenteilen 2 erkennbar. Denn mit den Seitenteilen 2 des Rahmens werden sämtliche Bodenbearbeitungswerkzeuge ebenfalls hochgeschwenkt, so dass die Grubberzinken nicht mehr nach unten ragen, sondern seitwärts wegstehen, und auch die Walzenelemente komplett weggeschwenkt sind. Am Boden befinden sich nur noch die Haupträder 9 des Hauptfahrwerks, das am Mittelteil 2 des Rahmens angebaut ist. Die Zusatzräder 10 und die vorderen Stützräder 11 an den Seitenteilen sind mit diesen nach oben in die Transportstellung geschwenkt.

Aus der Frontansicht nach Fig. 4 sowie aus der Draufsicht nach Fig. 5 erkennt man die an den Seitenteilen angeordneten und miteinander zusammenwirkenden Kupplungsmittel 12 zum verrastenden Kuppeln der beiden Seitenteile aneinander in der Transportstellung, so dass die hochgeklappten Seitenteile 2 einander stabilisieren und die gesamte Anordnung rüttelfest und unfallsicher für Fahrten über Straßen und holprige Feldwege stabilisiert ist.

## Patentansprüche

1. Bodenbearbeitungsgerät für große Arbeitsbreiten, mit einem Rahmen (1, 2), an dem eine Mehrzahl von Bodenbearbeitungswerkzeugen wie beispielsweise Grubberzinken (6), Einebnungsorgane (7) und Walzenelemente (8) angeordnet sind, weiter mit einem am Rahmen angeordneten höhenverstellbaren Fahrwerk (9, 10), und mit einer am Rahmen (1, 2) angeordneten Deichsel (5) zum Anhängen an einen Traktor,
wobei der Rahmen (1, 2) in Längsrichtung dreigeteilt ist und aus einem Mittelteil (1), an welchem die Deichsel (5) angeordnet ist und das Fahrwerk (9) angebaut ist, und aus zwei beiderseits desselben verlaufenden Seitenteilen (2) besteht, die mittels Scharniergelenken mit längs verlaufenden Scharnierachsen am Mittelteil (1) angelenkt sind und mittels Hydraulikzylindern (4), die zwischen dem Mittelteil (1) und den Seitenteilen (2) angeordnet sind, zwischen einer ausgeklappten Arbeitsstellung und einer eingeklappten Transportstellung klappbar sind, wobei in der nach oben weisenden, Transportstellung bildenden Position die beiden Seitenteile (2) etwa parallel zueinander verlaufen,
und das Fahrwerk ein am Mittelteil (1) des Rahmens angebautes Hauptfahrwerk umfasst, das mehrere, sich über die Hauptfahrwerksbreite verteilt angeordnete Haupträder (9) umfasst, und an jedem Seitenteil (2) ein Zusatzfahrwerk umfasst, das ein Zusatzrad (10) aufweist, welches in der Arbeitsstellung das Hauptfahrwerk seitwärts verbreitert,
**dadurch gekennzeichnet, dass** die Seitenteile (2) in ihrer in die Transportstellung geklappten Position mittels Kupplungsmitteln (12) aneinander kuppelbar sind, und dass sämtliche Bodenbearbeitungswerkzeuge (6, 7, 8) ausschließlich an den Seitenteilen (2) des Rahmens angeordnet sind, während der Mittelteil (1) des Rahmens lediglich eine die Deichsel (5) mit dem Fahrwerk (9) verbindende sowie die Seitenteile (2) tragende Tragekonstruktion bildet.

2. Bodenbearbeitungsgerät nach Anspruch 1, wobei die Kupplungsmittel (12) jeweils außen an den Seitenteilen (2) angeordnete, beim Klappen der Seitenteile (2) in die Transportstellung miteinander verrastbare Kupplungsmittel sind.

3. Bodenbearbeitungsgerät nach einem der Ansprüche 1 bis 2, wobei am vorderen Ende jedes Seitenteils (2) ein höhenverstellbares Stützrad (11) angeordnet ist.

4. Bodenbearbeitungsgerät nach Anspruch 1, wobei Haupträder (9) und Zusatzräder (10) synchron höhenverstellbar sind.

## Claims

1. Soil-tilling device for large working widths, with a frame (1, 2) on which a plurality of soil-working tools, such as cultivator tines (6), levelling members (7) and roller elements (8) are arranged, having further a height-adjustable rolling gear (9, 10) disposed on the frame, and a drawbar (5) disposed on the frame (1, 2) for connection to a tractor,
wherein the frame (1, 2) is divided into three parts in the longitudinal direction and consists of a central part (1) on which the drawbar (5) is arranged and the rolling gear (9) is mounted, and of two lateral parts (2) extending to both sides of the central part, the lateral parts being articulated to the central part (1) by means of hinge joints with longitudinally extending hinge axes, and being pivotable between a folded-out operating position and a folded-in transport position by means of hydraulic cylinders (4) that are arranged between the central part (1) and the lateral parts (2), wherein the two lateral parts (2) extend approximately in parallel to each other in the upwardly facing position that forms the transport position,
and the rolling gear comprises a main rolling gear mounted to the central part (1) of the frame and comprising several main wheels (9) distributed over the width of the main rolling gear, as well as one auxiliary rolling gear arranged on each lateral part (2) and comprising an auxiliary wheel (10) that laterally broadens the main rolling gear in the operating position,
**characterised in that** the lateral parts (2) can be coupled to each other in their position folded into the transport position by means of coupling means (12), and **in that** all soil-tilling tools (6, 7, 8) are arranged exclusively on the lateral parts (2) of the frame, while the central part (1) of the frame only forms a support construction connecting the drawbar (5) to the rolling gear (9) and carrying lateral parts (2).

2. Soil-tilling device according to claim 1, wherein the coupling means (12) respectively are coupling means that are arranged on the outside of the lateral parts (2) and can be locked with each other during pivoting of the lateral parts (2) into the transport position.

3. Soil-tilling device according to any one of claims 1 to 2, wherein a height-adjustable support wheel (11) is arranged on the front end of each lateral part (2).

4. Soil-tilling device according to claim 1, wherein the main wheels (9) and the auxiliary wheels (10) are synchronously height-adjustable.

## Revendications

1. Dispositif de travail du sol pour largeurs de travail importantes, avec un cadre (1, 2) auquel une pluralité des outils de travail du sol, par exemple des dents de cultivateur (6), des éléments de nivellement (7) et des éléments roulants (8), est disposée, puis avec un chariot (9, 10) réglable en hauteur et disposé sur le cadre, et avec une barre de traction (5) disposée sur le cadre (1, 2) pour la fixation à un tracteur,
le cadre (1, 2) étant divisé, dans la direction longitudinale, en trois parties, et consistant d'une partie centrale (1) sur laquelle la barre de traction (5) est disposé est le chariot (9) est monté, et de deux parties latérales (2) qui s'étendent des deux côtés de la partie centrale et qui sont articulées à la partie centrale (1) au moyen des charnières avec axes de charnière s'étendant longitudinalement, et qui peuvent être pivotées entre une position de travail dépliée et une position de transport repliée au moyen des cylindres hydrauliques (4) disposés entre la partie centrale (1) et les parties latérales (2), les deux parties latérales (2) s'étendant sensiblement parallèlement dans la position orientée vers le haut formant la position de transport,
dans lequel le chariot comprend un chariot principal monté sur la partie centrale (1) du cadre et comprenant plusieurs roues principales (9) distribués sur la largeur du chariot principal, et comprend un chariot auxiliaire sur chaque partie latérale (2), avec une roue auxiliaire (10), latéralement élargissant le chariot principal dans la position de travail,
**caractérisé en ce que** les parties latérales (2), dans leur position pliée dans la position de transport, peuvent être couplées l'une avec l'autre au moyen des moyens de couplage (12), et **en ce que** tous les outils de travail du sol (6, 7, 8) ne sont disposés exclusivement qu'aux parties latérales (2) du cadre, alors que la partie centrale (1) du cadre seulement forme une construction de support reliant la barre de traction (5) avec le chariot (9) et supportant les parties latérales (2).

2. Dispositif de travail du sol selon la revendication 1, dans lequel les moyens de couplage (12) sont des moyens de couplage respectivement disposés à l'extérieur des parties latérales (2) qui peuvent être verrouillés l'un avec l'autre pendant le pliage des parties latérales (2) dans la position de transport.

3. Dispositif de travail du sol selon l'une quelconque des revendications 1 à 2, dans lequel une roue de support (11) réglable en hauteur est disposée au niveau de l'extrémité frontale de chaque partie latérale (2).

4. Dispositif de travail du sol selon la revendication 1, dans lequel les roues principales (9) et les roues auxiliaires (10) sont réglables en hauteur de façon synchrone.
